(19) Europäisches Patentamt
European Patent Office
Office européen des brevets

(11) **EP 3 374 240 B1**

(12) **EUROPÄISCHE PATENTSCHRIFT**

(45) Veröffentlichungstag und Bekanntmachung des Hinweises auf die Patenterteilung:
**23.02.2022  Patentblatt 2022/08**

(21) Anmeldenummer: **16770767.8**

(22) Anmeldetag: **26.09.2016**

(51) Internationale Patentklassifikation (IPC):
**B60W 30/16** (2020.01)    **B60W 50/00** (2006.01)
**B60W 50/06** (2006.01)

(52) Gemeinsame Patentklassifikation (CPC):
**B60W 30/16; B60W 50/0097;** B60W 2050/065;
B60W 2520/10; B60W 2520/105; B60W 2554/4041;
B60W 2554/801; B60W 2554/804; B60W 2720/10

(86) Internationale Anmeldenummer:
**PCT/EP2016/072801**

(87) Internationale Veröffentlichungsnummer:
**WO 2017/080709 (18.05.2017 Gazette 2017/20)**

(54) **VERFAHREN, COMPUTERPROGRAMMPRODUKT, VORRICHTUNG, UND FAHRZEUG UMFASSEND DIE VORRICHTUNG ZUM STEUERN EINER TRAJEKTORIENPLANUNG EINES EGOFAHRZEUGS**

METHOD, COMPUTER PROGRAM PRODUCT, DEVICE, AND VEHICLE COMPRISING THE DEVICE FOR CONTROLLING A TRAJECTORY PLANNING PROCESS OF AN EGO-VEHICLE

PROCÉDÉ, PRODUIT-PROGRAMME INFORMATIQUE, DISPOSITIF ET VÉHICULE COMPORTANT LE DISPOSITIF POUR LA COMMANDE D'UNE PLANIFICATION DE TRAJECTOIRE D'UN EGO-VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2015  DE 102015221920**

(43) Veröffentlichungstag der Anmeldung:
**19.09.2018  Patentblatt 2018/38**

(73) Patentinhaber: **Bayerische Motoren Werke Aktiengesellschaft
80809 München (DE)**

(72) Erfinder:
• **HELLFRITSCH, Christoph
85716 Unterschleissheim (DE)**
• **MENENDEZ, Cristina
81373 München (DE)**
• **RATHGEBER, Christian
80801 München (DE)**
• **WINKLER, Franz
80796 München (DE)**

(56) Entgegenhaltungen:
**DE-A1- 10 017 662      DE-A1-102004 029 371
DE-T2- 69 123 947**

EP 3 374 240 B1

**Beschreibung**

Die Erfindung betrifft ein Verfahren zum Steuern einer Trajektorienplanung eines Fahrzeugs, insbesondere eines Egofahrzeugs. Ferner betrifft die Erfindung ein Computerprogrammprodukt, eine Vorrichtung und ein Fahrzeug umfassend die Vorrichtung zum Steuern einer Trajektorienplanung eines Egofahrzeugs.

Zukünftige Fahrerassistenzsystem, kurz FAS, können durch eine exakte Planung der zu fahrenden Trajektorie einen Fahrer stärker unterstützen als es heutige regelbasierte Systeme. Aktuelle regelungstechnische Lösungen einer aktiven Geschwindigkeitsregelung von Fahrzeugen verwenden meist nur einen Regler, der abhängig von einer Situation unterschiedlich parametriert werden kann. Für hochautomatisierte Fahrfunktionen kann eine exakte Planung der zu fahrenden Trajektorie zwingend erforderlich sein. Eine Planung einer vom Fahrzeug umsetzbaren und komfortablen Trajektorie kann allerdings mit erheblichem Rechenaufwand verbunden sein. Der Rechenaufwand kann sich weiter deutlich erhöhen, wenn beispielsweise Trajektorien für unterschiedliche Fahrtmodi durch die Trajektorienplanung berechnet und ausgewertet werden müssen. Dieser Rechenaufwand kann so hoch sein, dass die Trajektorie auf Steuergeräten des Fahrzeugs nicht oder nur mit erheblicher Verzögerung berechnet werden können.

In der DE 10017622 A1 ist ein Verfahren zur Steuerung des Abstands eines Fahrzeugs zu einem vorausfahrenden Fahrzeug beschrieben, bei dem der Abstand und die Relativgeschwindigkeit des vorausfahrenden Fahrzeugs gemessen werden und der Abstand in einem Abstandsregelmodus durch Beschleunigen oder Verzögern des Fahrzeugs auf einen vorgegebenen Sollabstand geregelt wird. Die bei der Abstandsregelung zugelassene Verzögerung ist begrenzt. In Situationen, in denen sich der Sollabstand mit dieser begrenzten Verzögerung nicht einhalten lässt, wird von der Abstandsregelung zu einer Abstandsbegrenzung auf einen Mindestabstand, der kleiner als der Sollabstand ist, übergegangen und das Fahrzeug nach Erreichen des Mindestabstands weiter verzögert, so dass der Abstand wieder auf den Sollabstand zunimmt.

Es ist daher eine Aufgabe der Erfindung eine Steuerung einer Trajektorienplanung eines Fahrzeugs, insbesondere eines Egofahrzeugs, effizient zu verbessern.

Gelöst wird diese Aufgabe durch die Merkmale der unabhängigen Ansprüche. Vorteilhafte Ausgestaltungen und Weiterbildungen der Erfindung ergeben sich aus den abhängigen Ansprüchen.

Gemäß einem Aspekt zeichnet sich die Erfindung aus durch Verfahren nach Anspruch 1 zum Steuern einer Trajektorienplanung eines Fahrzeugs, insbesondere eines Egofahrzeugs. Das Verfahren umfasst ein Bestimmen einer Längsbewegung des Egofahrzeugs, wobei die Längsbewegung eine Geschwindigkeit des Egofahrzeugs umfasst. Das Verfahren umfasst weiter ein Bestimmen einer Längsbewegung eines Objekts, wobei die Längsbewegung eine Geschwindigkeit des Objekts umfasst. Vorzugsweise ist das Objekt ein Fahrzeug, z.B. ein Kraftfahrzeug oder ein Motorrad. Das Verfahren umfasst ein Berechnen einer Zieltrajektorie des Objekts basierend auf einer prädizierten Trajektorie des Objekts. Eine prädizierte Trajektorie ist eine Trajektorie, die beispielsweise mittels eines Bewegungsmodells des Objekts vorausbestimmt bzw. vorausberechnet wird. Dazu können Annahmen bezüglich einer Beschleunigung, einer Geschwindigkeit, und/oder einer Position des Objekts gemacht werden. Eine Zieltrajektorie kann beispielsweise einen Sicherheitsabstand umfassen, der zwischen dem Objekt und dem Egofahrzeug am Ende eines Manövers, insbesondere eines vorgegebenen Manövers, einzuhalten ist. Das Verfahren umfasst weiterhin ein Berechnen eines Endzeitpunkts eines Manövers des Egofahrzeugs, wobei der Endzeitpunkt des Manövers ein Zeitpunkt ist, an welchem eine Differenzgeschwindigkeit zwischen dem Egofahrzeug und dem Objekt abgebaut ist. Das Verfahren umfasst ein Berechnen eines Abstands zwischen einer Position des Egofahrzeugs und einer Position des Fremdfahrzeugs bezüglich der berechneten Zieltrajektorie zum berechneten Endzeitpunkt des Manövers des Egofahrzeugs, und, falls der berechnete Abstand des Egofahrzeugs zum berechneten Endzeitpunkt des Manövers gleich einem vorgegebenen Schwellwert ist oder einen vorgegebenen Schwellwert unterschreitet, ein Setzen der bestimmten Geschwindigkeit des Objekts als Zielgeschwindigkeit des Egofahrzeugs, und ein Übergeben bzw. ein Übermitteln der Zielgeschwindigkeit an eine Trajektorienplanung zur Berechnung einer Folgefahrttrajektorie für das Egofahrzeug. Der vorgegebene Schwellwert kann ein vorgegebener Sicherheitsabstand sein. Der vorgegebene Sicherheitsabstand kann dynamisch und/oder statisch sein. Beispielsweise kann der vorgegebene Sicherheitsabstand in

Abhängigkeit der Geschwindigkeit des Objekts und/oder des Egofahrzeugs bestimmt werden.

Der Schwellwert kann durch eine Hysterese-Funktion, insbesondere durch eine Hysterese-Funktion des Sicherheitsabstands, bestimmt werden. Eine Berechnen des vorgegebenen Schwellwert mittels eine Hysterese-Funktion kann ein kontinuierliches Hin- und Herschalten, ein sogenanntes Toggeln, zwischen einer Freifahrt und einer Folgefahrt verhindern. Das Egofahrzeug kann dadurch mit einem höheren Komfort gesteuert werden.

Das Verfahren umfasst ferner ein Empfangen einer Wunschgeschwindigkeit des Egofahrzeugs, fund, falls die Wunschgeschwindigkeit des Egofahrzeugs kleiner als die Geschwindigkeit des Objekts ist und der berechnete Abstand des Egofahrzeugs zum berechneten Endzeitpunkt des Manövers einen vorgegebenen Schwellwert, z.B. einen vorgegebenen Sicherheitsabstand, überschreitet, ein Setzen der Wunschgeschwindigkeit als Zielgeschwindigkeit des Egofahrzeugs und ein Übergeben der Zielgeschwindigkeit an eine Trajektorienplanung zur Berechnung einer Freifahrttrajektorie für das Egofahrzeug.

Vorteilhafterweise kann durch das Bestimmen eines Endzeitpunkt und die Berechnung eines Abstands zum bestimmten Endzeitpunkt effizient bestimmt werden, ob das Egofahrzeug ein Manöver in Freifahrt oder in Folgefahrt ausführen kann. Falls der Abstand zum Endzeitpunkt gleich einem vorgegebenen Schwellwert ist oder einen vorgegebenen Schwellwert unterschreitet, kann die Zielgeschwindigkeit des Egofahrzeug nur bis maximal zur Geschwindigkeit des Objekts gewählt werden, um beispielsweise ein Unterschreiten eines Sicherheitsabstands und/oder eine Kollision mit einem sich im Vorderbereich des Egofahrzeugs bewegenden Objekts zu verhindern. Das Egofahrzeug kann bei einem berechneten Abstand, der gleich einem vorgegebenen Schwellwert ist oder einen vorgegebenen Schwellwert unterschreitet, von einem Freifahrtmodus in einen Folgefahrtmodus zum aktuellen Zeitpunkt umschalten. Somit kann das Egofahrzeug vorausschauend in Längsrichtung eine mögliche, zukünftige Bewegung des Objekts schon zum aktuellen Zeitpunkt antizipieren und entsprechend reagieren, z.B. in dem als Zielgeschwindigkeit die Geschwindigkeit des Objekts gewählt wird. Ein Folgefahrtmodus des Egofahrzeugs kann effizient und in vorausschauender Art und Weise erkannt werden. Die Trajektorienplanung kann somit effizient gesteuert werden, indem eine oder mehrere Folgefahrttrajektorien mit der bestimmten Zielgeschwindigkeit geplant werden können. Weitere Trajektorien, insbesondere Freifahrttrajektorien müssen durch die Trajektorienplanung nicht berechnet werden, da vor Beginn der Trajektorienplanung bestimmt wurde, dass das Egofahrzeug sich in einem Folgefahrtmodus befindet.

Gemäß einer vorteilhaften Ausgestaltung kann die prädizierte Trajektorie basierend auf einem vorgegebenen Bewegungsmodell des Objekts in Abhängigkeit der bestimmten Längsbewegung des Objekts bestimmt werden, und/oder kann die Zieltrajektorie einen Sicherheitsabstand zu dem Objekt berücksichtigen, und/oder kann der vorgegebene Schwellwert dem Sicherheitsabstand entsprechen. Durch das vorgegebene Bewegungsmodell kann ein zukünftiges Verhalten des Objekts in Längsrichtung effizient berechnet werden. Ferner können durch die Berücksichtigung eines Sicherheitsabstands die im Straßenverkehr üblichen Sicherheitsparameter direkt bei der Steuerung der Trajektorienplanung des Fahrzeugs einbezogen werden.

Gemäß einer weiteren vorteilhaften Ausgestaltung kann der Endzeitpunkt des Manövers basierend auf einem Bewegungsmodell des Objekts und einem Bewegungsmodells für das Egofahrzeug berechnet werden. Durch die Verwendung von Bewegungsmodellen kann ein zukünftiges Verhalten des Egofahrzeugs und des Objekts effizient bestimmt bzw. berechnet werden.

Gemäß einer weiteren vorteilhaften Ausgestaltung kann das Bewegungsmodell des Objekts eine Beschleunigung des Objekts bis zu einem vorgegebenen Zeitpunkt konstant halten und nach dem vorgegebenen Zeitpunkt die Beschleunigung auf 0 setzen. Ferner kann das Bewegungsmodell des Egofahrzeugs eine vorgegebene mittlere Beschleunigung des Egofahrzeugs bis zum Endzeitpunkt des Manövers halten. Hiermit kann mit geringem Rechenaufwand ein zukünftiges Beschleunigungsverhalten für das Objekt und das Egofahrzeug berechnet werden.

Gemäß einer weiteren vorteilhaften Ausgestaltung kann die Position des Egofahrzeugs durch das Bewegungsmodell des Egofahrzeugs basierend auf der bestimmten Längsbewegung des Egofahrzeugs zu dem Endzeitpunkt des Manövers berechnet werden. Ferner kann die Position des Objekts durch das Bewegungsmodells des Objekts basierend auf der bestimmten Längsbewegung des Objekts zu dem Endzeitpunkt des Manövers berechnet werden. Hiermit kann, ausgehend von der aktuellen Längsbewegung des Egofahrzeugs und des Objekts, die Position und damit auch der Abstand zum Endzeitpunkt des Manövers zwischen dem Egofahrzeug und dem Objekt einfach berechnet werden.

Gemäß einer weiteren vorteilhaften Ausgestaltung kann das Verfahren, falls die Wunschgeschwindigkeit des Egofahrzeugs größer als die Geschwindigkeit oder gleich der Geschwindigkeit des Objekts ist und/oder der berechnete Abstand des Egofahrzeugs zum berechneten Endzeitpunkt des Manövers gleich einem vorgegebenen Schwellwert ist oder einen vorgegebenen Schwellwert unterschreitet, ein Setzen der Geschwindigkeit des Objekts als Zielgeschwindigkeit des Egofahrzeugs umfassen. Hiermit können effizient eine Freifahrt bzw. ein Freifahrtmodus und/oder eine Folgefahrt bzw. eine Folgefahrtmodus des Egofahrzeugs bestimmt werden.

Gemäß einer weiteren vorteilhaften Ausgestaltung kann das Verfahren weiterhin ein Übergeben der Zielgeschwindigkeit an eine Trajektorienplanung zur Berechnung einer Folgefahrttrajektorie für das Egofahrzeug umfassen, falls der berechnete Abstand des Egofahrzeugs zum berechneten Endzeitpunkt des Manövers gleich einem vorgegebenen Schwellwert ist oder einen vorgegebenen Schwellwert unterschreitet. Hiermit kann eine Trajektorienplanung effizient gesteuert werden. Insbesondere können eine Freifahrt und die Trajektorienplanung für die Freifahrt effizient bestimmt werden. Dadurch kann eine Planung von Trajektorien für beide Fahrtmodi, Freifahrt und Folgefahrt, nicht mehr notwendig sein. Folglich kann die Trajektorienplanung ressourceneffizient die Trajektorien auf einem Steuergerät für nur die Freifahrt oder die Folgefahrt des Egofahrtzeugs planen.

Gemäß einem weiteren Aspekt zeichnet sich die Erfindung aus durch ein Computerprogrammprodukt zum Steuern einer Trajektorienplanung eines Egofahrzeugs, wobei das Computerprogrammprodukt Instruktionen umfasst, die, wenn ausgeführt auf einem Steuergerät oder einem Rechner des Egofahrzeugs, das oben beschriebene Verfahren ausführen.

Gemäß einem weiteren Aspekt zeichnet sich die Erfindung aus durch eine Vorrichtung zum Steuern einer Trajektorienplanung eines Egofahrzeugs, wobei die Vorrichtung dazu ausgebildet ist, das oben beschriebene Verfahren auszuführen.

Gemäß einem weiteren Aspekt zeichnet sich die Erfindung aus durch ein Fahrzeug umfassend eine Vorrichtung zum Steuern einer Trajektorienplanung eines Egofahrzeugs, wobei die Vorrichtung dazu ausgebildet ist, das oben beschriebene Verfahren auszuführen.

Weitere Merkmale der Erfindung ergeben sich aus den Ansprüchen, den Figuren und der Figurenbeschreibung. Alle vorstehend in der Beschreibung genannten Merkmale und Merkmalkombinationen sowie die nachfolgend in der Figurenbeschreibung genannten und/oder in den Figuren allein gezeigten Merkmale und Merkmalkombinationen sind nicht nur in der jeweils angegebenen Kombination, sondern auch in anderen Kombinationen oder aber in Alleinstellung verwendbar.

Im Folgenden wird anhand der beigefügten Zeichnungen ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigen schematisch

**Fig. 1** eine beispielhafte Verkehrssituation,
**Fig. 2** ein beispielhaftes Verfahren zum Steuern einer Trajektorienplanung,
**Fig. 3** einen beispielhaften Geschwindigkeitsverlauf zwischen einem Egofahrzeug und einem Objekt, und
**Fig. 4** einen beispielhaften Verlauf von Trajektorien eines Egofahrzeugs und eines Objekts.

Unabhängig vom verwendeten Optimierungsverfahren kann eine Berechnung einer fahrbaren Trajektorie mit erheblichem Rechenaufwand verbunden sein. Eine Realisierung der Berechnung einer fahrbaren Trajektorie kann sehr schnell an die Grenzen der im Fahrzeug rechenbaren Umfänge stoßen. Aus diesem Grund sind für die Berechnung bzw. Planung von Trajektorien Maßnahmen zu treffen, um einen Berechnungsaufwand für die Berechnung einer fahrbaren Trajektorie zu verringern.

Eine globale Optimierung einer zufahrenden Trajektorie im gesamten Lösungsraum unter Einhaltung aller Nebenbedingungen kann auf Steuergeräten eines Fahrzeugs nicht umgesetzt werden, da der Rechenaufwand für eine globale Optimierung zu hoch sein kann. Um den Rechenaufwand zu reduzieren, kann ein der Trajektorienplanung vorgelagertes Verfahren ausgeführt werden. Ziel des vorgelagerten Verfahrens ist es, Parameter festzulegen, innerhalb derer eine nachfolgende Trajektorienplanung eine von einem Fahrzeug zu fahrende Trajektorie planen kann. In anderen Worten, ein Lösungsraum für die Trajektorienplanung kann durch das vorgelagerte Verfahren eingeschränkt werden. Trajektorien, die nicht möglich sind, können dabei durch das vorgelagerte Verfahren ausgeschlossen werden, so dass der Rechenaufwand für die nachgelagerte Trajektorienplanung effizient reduziert werden kann.

Zur Beschreibung der Position und Bewegung des eigenen Fahrzeugs, auch Egofahrzeug genannt, und anderer Verkehrsteilnehmer, im Folgenden auch Objekt oder Fremdfahrzeug genannt, können vereinfachenden Annahmen getroffen werden. Innerhalb des vorgelagerten Verfahrens kann ein Lösungsraum in Querrichtung diskretisiert werden. Beispielsweise können nur die Fahrspurmitten als Ziel einer zu berechnenden Trajektorie betrachtet werden. Für die Zeit eines Spurwechsels können beide Fahrspuren, d.h. die aktuelle Fahrspur und die Zielfahrspur, als belegt angenommen werden.

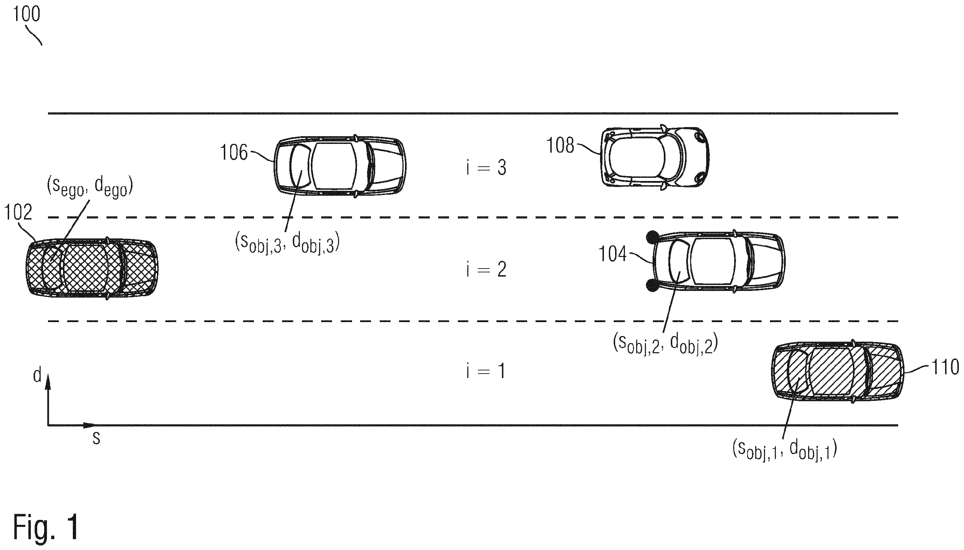

**Fig. 1** zeigt eine beispielhafte Verkehrssituation 100. Das Fahrzeug 102 ist das Egofahrzeug. Die Fahrzeuge 104, 106, und 108 sind Fremdfahrzeuge. Zur besseren Darstellung sind die Fahrspuren von i=1 bis i=3 nummeriert. Auf der Fahrspur i=1 ist kein Objekt, z.B. eine weiteres Fremdfahrzeug, vorhanden. Aus diesem Grund wird ein Phantomfahrzeug 110 auf der Spur i=1 der Fahrbahn angenommen. Das Phantomfahrzeug 110 kann am Rand des Erfassungsbereichs einer Umfeldsensorik des Egofahrzeugs 102 platziert werden. Somit sind auf allen Spuren der Fahrbahn Fahrzeuge vorhanden.

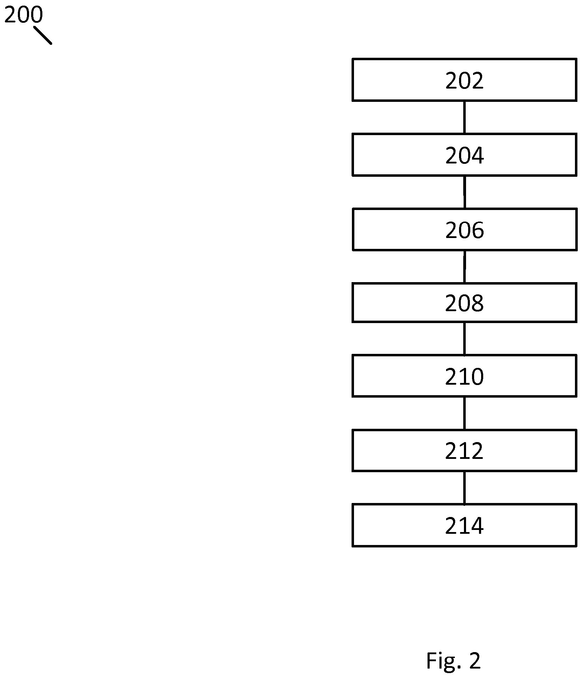

**Fig. 2** zeigt ein beispielhaftes vorgelagertes Verfahren 200. In Abhängigkeit des vorgelagerten Verfahrens 200 kann die Trajektorienplanung eine zu fahrende Trajektorie für das Egofahrzeug planen. Das vorgelagerte Verfahren 200 kann somit die nachgelagerte Trajektorienplanung steuern. Das Verfahren 200 kann vorzugsweise durch das Egofahrzeug nur ausgeführt werden, wenn mindestens ein vorgegebener Sicherheitsabstand zu einem vorausfahrenden Objekt gegeben ist. Falls kein vorgegebener Sicherheitsabstand beim Ausführen des Verfahrens vorhanden ist, kann das Verfahren 200 nicht ausgeführt werden. In diesem Fall befindet sich das Egofahrzeug in einem Folgefahrtmodus und die nachgelagerte Trajektorienplanung kann eine Folgefahrttrajektorie für das Egofahrzeug planen bzw. berechnen.

Das Verfahren 200 kann eine Längsbewegung des Egofahrzeugs 102 zu einem aktuellen Zeitpunkt bestimmen 202, z.B. durch eine Sensorik des Egofahrzeugs 102 messen. Die Längsbewegung des Egofahrzeugs 102 kann eine Beschleunigung, eine Geschwindigkeit, und/oder eine Position des Egofahrzeugs 102 umfassen. Das Verfahren 200 kann ferner eine Längsbewegung eines Objekts, z.B. eines Fremdfahrzeugs 104 bis 110, bestimmen 204, z.B. durch die Sensorik des Egofahrzeugs messen. Die Längsbewegung des Objekts kann eine Position, eine Geschwindigkeit, und/oder eine Beschleunigung des Objekts umfassen.

Die Längsbewegung des Egofahrzeugs 102 und einem Fremdfahrzeug kann mittels eines jeweiligen Bewegungsmodells berechnet werden. Im Detail kann die Längsbewegung der Fremdfahrzeuge bzw. Objekte kann unter Annahme einer konstant bleibenden, gemessenen Beschleunigungen $\ddot{s}_{obj,0}$ ausgehend von der gemessenen Anfangs-

geschwindigkeit $\dot{s}_{obj,0}$ und Anfangsposition $s_{obj,0}$ mit

$$\dot{s}_{obj}(t) = \dot{s}_{obj,0} + \ddot{s}_{obj,0} \cdot t \quad \text{für } t < t_{konst} \quad (1)$$

bzw.

$$\dot{s}_{obj}(t) = \dot{s}_{obj,0} + \ddot{s}_{obj,0} \cdot t_{konst} \quad \text{für } t \geq t_{konst} \quad (2)$$

beschrieben werden. Entsprechend ergibt sich für die Position

$$s_{obj}(t) = s_{obj,0} + \dot{s}_{obj,0} \cdot t + \frac{1}{2} \cdot \ddot{s}_{obj,0} \cdot t^2 \quad \text{für } t < t_{konst} \quad (3)$$

bzw.

$$s_{obj}(t) = s_{obj,0} + \dot{s}_{obj,0} \cdot t_{konst} + \frac{1}{2} \cdot \ddot{s}_{obj,0} \cdot t^2_{konst}$$

$$+ (\dot{s}_{obj,0} + \ddot{s}_{obj,0} \cdot t_{konst}) \cdot (t - t_{konst}) \quad \text{für } t \geq t_{konst} \,. \quad (4)$$

Die Ego-Fahrzeug-Bewegung ergibt sich analog dazu mit

$$\dot{s}_{ego}(t) = \dot{s}_{ego,0} + \ddot{s}_{ego,0} \cdot t \quad (5)$$

bzw.

$$s_{ego}(t) = s_{ego,0} + \dot{s}_{ego,0} \cdot t + \frac{1}{2} \cdot \ddot{s}_{ego,0} \cdot t^2 \,. \quad (6)$$

Das Verfahren 200 kann für eine oder mehrere befahrbare Spuren einer Straße ausgeführt werden. Für welche Objekte das Verfahren 200 ausgeführt wird, kann von einem vorgegebenen Manöver abhängen. Mögliche Manöver können eine Spurhalten oder ein Spurwechsel des Egofahrzeugs sein. Ferner kann das Verfahren 200 Objekte betrachten, die in einen Manöverraum des Egofahrzeugs eindringen. Wenn beispielsweise ein Objekt in eine Fahrspur des Egofahrzeugs einschert, dann kann für dieses Objekt das Verfahren 200 ausgeführt werden. Durch eine manöverabhängige Auswahl der Objekte kann die Anzahl der Objekte, für die das Verfahren 200 ausgeführt wird, effizient reduziert werden.

Für eine Spur können ein Vorderfahrzeug und eine prädizierte Trajektorie zu dem Vorderfahrzeug bestimmt werden. Aus der prädizierten Trajektorie kann mithilfe eines Abstandsgesetzes eine notwendige Trajektorie abgeleitet werden. Beispielsweise kann die im Straßenverkehr übliche 2s-Regel für eine Berechnung einer Zieltrajektorie angewandt werden um einen Sicherheitsabstand zu berechnen. Die 2s-Regel besagt, dass als Sicherheitsabstand zwischen zwei Fahrzeugen außerhalb geschlossener Ortschaften eine in 2 Sekunden gefahrene Strecke gewählt werden soll. Beispielsweise kann die im Straßenverkehr übliche 2s-Regel verwendet und die Zieltrajektorie mit

$$s_{ziel,i}(t) = s_{obj,i}(t) - s_{statisch} - 2 \cdot \dot{s}_{obj,i}(t) \quad (7)$$

berechnet werden 206. Der Parameter $s_{statisch}$ beschreibt dabei einen einzuhaltenden Sicherheitsabstand im Stillstand. Ist kein Vorderfahrzeug vorhanden, kann ein virtuelles Phantomobjekt am Rand des Erfassungsbereichs der Umfeldsensorik angenommen werden. Dieses Fahrzeug wird mit einer Worst-Case-Geschwindigkeit angenommen und ermöglicht so, sogenannte Inevitible Collision States, kurz ICS, zu vermeiden. Diese Zustände beschreiben Situationen, in denen eine Kollision nicht mehr vermieden werden kann, egal welche Trajektorie geplant wird.

Das Verfahren 200 kann zunächst eine Längsbewegung prüfen und kann diese Längsbewegung anschließend optional mit einer Querbewegung überlagern. Für die Längsbewegung ist zu entscheiden, ob auf ein Vorderfahrzeug reagiert werden soll, d.h. ob eine Folgefahrt vorliegt, oder ob auf eine vorgegebene Zielgeschwindigkeit, z.B. eine vorgegebene Wunschgeschwindigkeit, geführt werden soll, d.h. ob eine Freifahrt vorliegt. Die Dauer, um auf das jeweilige Vorderfahrzeug aufzuschließen, kann sich aus einer Betrachtung der Relativgeschwindigkeit zwischen dem Egofahrzeug 102 und einem der Fremdfahrzeuge 104, 106, 108 ergeben. Dabei kann die Zieltrajektorie (7) verwendet werden. Am Ende eines Manövers, d.h. zum Zeitpunkt $t_{e,\,s,\,i}$, soll die Differenzgeschwindigkeit abgebaut sein. Es ergibt sich damit die Forderung

$$\dot{s}_{rel}(t = t_{e,s,i}) = \dot{s}_{obj,i}(t = t_{e,s,i}) - \dot{s}_{ego}(t = t_{e,s,i}) \overset{!}{=} 0 \,. \quad (8)$$

Die Geschwindigkeit des Egofahrzeugs $\dot{s}_{ego,0}$ ergibt sich entsprechend (5). Für $\ddot{s}_{ego,0}$ wird eine mittlere Verzögerung oder eine mittlere Beschleunigung $\ddot{s}_{apx}$, je nachdem ob die momentane Differenzgeschwindigkeit negativ oder positiv ist, betrachtet:

$$\ddot{s}_{apx} = \begin{cases} \ddot{s}_{\max-} & \text{für} \quad \dot{s}_{rel} \leq 0 \\ \ddot{s}_{\max+} & \text{für} \quad \dot{s}_{rel} > 0 \end{cases} \quad (9)$$

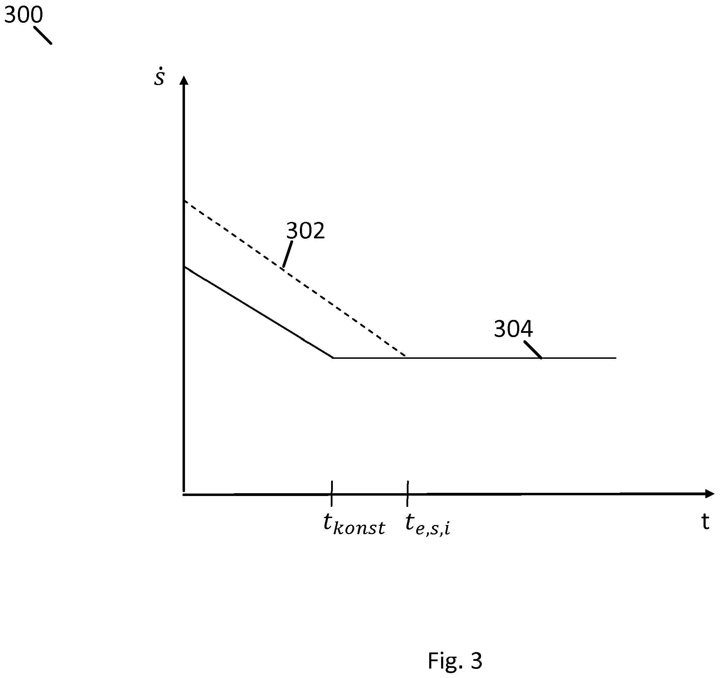

wobei $\ddot{s}_{\max+}$ die mittlere Beschleunigung des Ego-Fahrzeugs 102 und $\ddot{s}_{\max-}$ die mittlere Verzögerung des Ego-Fahrzeugs 102 ist. Durch Auflösen von (8) ist es möglich, die Manöverdauer $t_{e,\,s,\,i}$ und/oder einen Endzeitpunkt des Manövers zu berechnen 208. Dieser Wert entspricht einer Time-to-Collision, kurz TTC. Ist der Wert negativ, kann das Manöver unmöglich sein und aus dem Lösungsraum ausgeschlossen werden. Bei mehreren positiven Lösungen kann der betragsmäßig kleinste Wert gewählt werden. **Fig. 3** zeigt einen beispielhaften Geschwindigkeitsverlauf 300 basierend auf einem Bewegungsmodell eines Objekts und einem Bewegungsmodell des Egofahrzeugs. Das Egofahrzeug 102 verzögert mit einer mittleren Verzögerung, so dass die Geschwindigkeit des Egofahrzeugs kontinuierlich abnimmt (siehe 302). Das Objekt verzögert kontinuierlich bis zu einer vorgegebenen Zeit $t_{konst}$ und hält dann die Geschwindigkeit (siehe 304). Zum Zeitpunkt $t_{e,s,i}$ kreuzen sich die Geschwindigkeitsverläufe des Egofahrzeugs und des Objekts. Zu diesem Zeitpunkt, d.h. zum Zeitpunkt $t_{e,s,i}$, prüft das Verfahren, ob ein Abstand zwischen dem Egofahrzeug und dem Objekt dem vorgegebenen Sicherheitsabstand der Zieltrajektorie entspricht. Der Abstand kann beispielsweise mit der Formel (10), siehe unten, berechnet werden. Falls der Abstand den vorgegebene Sicherheitsabstand verletzt, d.h. der Abstand gleich dem vorgegebenen Sicherheitsabstand ist oder den vorgegebenen Sicherheitsabstand unterschreitet, muss das Egofahrzeug auf eine Folgefahrt umschalten.

Der nötige Abstand für das Manöver kann sich durch Einsetzen der Manöverdauer in die Gleichung des Differenzabstandes ergeben bzw. berechnet werden 210:

$$s_{rel}(t = t_{e,s,i}) = s_{ziel,i}(t) - s_{ego}(t). \quad (10)$$

Eine Reaktion auf das Objekt durch eine Verzögerung oder Beschleunigung kann somit erst nötig sein, wenn diese Gleichung zu 0 wird. Wenn die Gleichung (10) 0 wird, befindet sich das Egofahrzeug 102 im Folgefahrtmodus und als Zielgeschwindigkeit kann die Objektgeschwindigkeit gewählt werden 212. Das Verfahren 200 übermittelt die Zielgeschwindigkeit an die Trajektorienplanung zu Berechnung einer Folgefahrttrajektorie 214. Die Trajektorienplanung kann eine oder mehrere Folgefahrttrajektorien planen, entlang deren das Fahrzeug fahren kann.

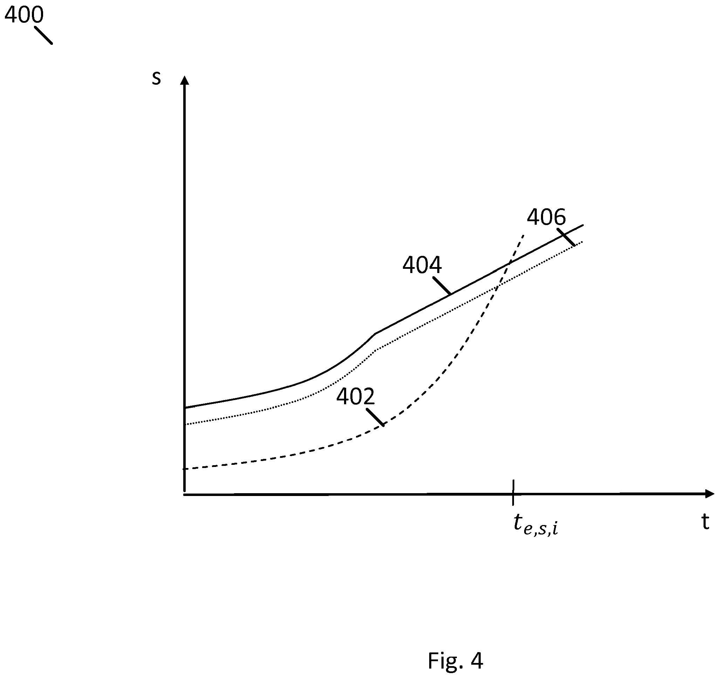

**Fig. 4** zeigt beispielhafte Trajektorienverläufe 400 bezüglich eines Manövers eines Egofahrzeugs unter Verwendung der Bewegungsmodelle des Egofahrzeugs 102 und eines Objekts, z.B. eines der Fremdfahrzeuge 104 bis 110. Eine Trajektorie des Manövers des Egofahrzeugs zeigt 402, eine prädizierte Trajektorie des Objekts zeigt 404, und eine Zieltrajektorie inklusive eines Sicherheitsabstands zeigt 406. Wie in Fig. 4 dargestellt, ist der Abstand zwischen der Trajektorie des Egofahrzeugs 102 und der Zieltrajektorie zum Endzeitpunkt $t_{e,s,i}$ des Manövers gleich 0, d.h. der Abstand ist gleich dem vorgegebenen Sicherheitsabstand. Das Egofahrzeug muss in einen Folgefahrtmodus wechseln bzw. schalten.

Solange das Vorderfahrzeug für eine Folgefahrt noch zu weit entfernt ist und der Differenzabstand $s_{rel}$ größer als 0 ist oder falls kein Vorderfahrzeug vorhanden ist oder die Wunschgeschwindigkeit unter der Objektgeschwindigkeit liegt, kann auf die Zielgeschwindigkeit $\dot{s}_{wunsch}$ beschleunigt bzw. abgebremst werden. Die Wunschgeschwindigkeit kann sich aus einer Fahrervorgabe oder durch ein überlagertes Fahrerassistenzsystem ergeben. Für die Ermittlung der Wunschgeschwindigkeit kann beispielsweise eine zukünftige Straßenkrümmung $K_s$ berücksichtigt werden, um $\dot{s}_{wunsch}$ gegebenenfalls zu begrenzen:

$$\dot{s}_{wunsch} = \min(\dot{s}_{wunsch}, \sqrt{\mu g \cdot 1/\kappa_s}) \quad (11)$$

In Abhängigkeit des Reibwerts $\mu$ kann sich eine maximale Kurvengrenzgeschwindigkeit ergeben. Alternativ kann statt $\mu g$ eine maximale Querbeschleunigung verwendet werden. Für die resultierende Wunschgeschwindigkeit kann ebenfalls eine notwendige Manöverdauer berechnet werden:

$$t_{e,s,i} = \frac{\left| \dot{s}_{wunsch} - \dot{s}_{ego,0} \right|}{\ddot{s}_{apx}} \quad (12)$$

Auch hier kann eine mittlere Beschleunigung $\ddot{s}_{apx}$ angenommen werden. Je nachdem, ob verzögert oder beschleunigt werden soll, kann ein negativer oder positiver Wert für die mittlere Beschleunigung gewählt werden:

$$\ddot{s}_{apx} = \begin{cases} \ddot{s}_{max-} & f\ddot{u}r \quad \dot{s}_{wunsch} \le \dot{s}_{ego,0} \\ \ddot{s}_{max+} & f\ddot{u}r \quad \dot{s}_{wunsch} > \dot{s}_{ego,0} \end{cases} \quad (13)$$

Entspricht die aktuelle betrachtete Spur i nicht der aktuellen Fahrspur, kann die berechnete Längsbewegung mit einer Querbewegung des Spurwechsels überlagert werden. Für einen Spurwechsel auf die Spur i ergibt sich die minimale Zeit durch

$$t_{e,d,i} = \sqrt{\frac{2 \cdot \left| d_i - d_{ego,0} \right|}{\ddot{d}_{apx}}} . \quad (14)$$

Dabei entspricht $d_i$ der Zielquerablage der ausgewählten Zielspur, $d_{ego,0}$ der gemessenen Querablage und $\ddot{d}_{apx}$ der gewünschten mittleren Querbeschleunigung. Hierbei kann ein von hinten kommendes Fahrzeug berücksichtigt werden. Mittels eines einfachen Abstandsgesetzes kann geprüft werden, ob der Spurwechsel möglich ist. Für ein von hinten ankommendes Fahrzeug kann ebenfalls ein Phantomobjekt angenommen werden.

Das Verfahren kann für die aktuelle Spur und/oder für weitere um die aktuelle Spur herumliegende Spuren durchgeführt werden. Eine Auswahl des optimalen Manövers kann anhand folgenden Kostenfunktionals bzw. folgender Bewertungsfunktion vorgenommen werden:

$$J_i = k_{spur} \left( i_{ziel} - i \right)^2 + k_v \left( \dot{s}_{wunsch} - \dot{s}_i \right)^2 \quad \text{(15)}$$

Das Kostenfunktional bzw. die Bewertungsfunktion erlaubt eine Gewichtung zwischen Abweichungen von der Zielgeschwindigkeit $\dot{s}_{wunsch}$ und Abweichungen von der Zielspur $i_{ziel}$. Der Parameter $k_{spur}$ ist dabei der Gewichtungsfaktor für die Abweichung zwischen Zielspur und gewählter Spur und $k_v$ der Gewichtungsfaktor für Abweichungen zwischen der Zielgeschwindigkeit und gewählter Geschwindigkeit $\dot{s}_i$. Nicht mögliche Manöver, z.B. Manöver mit negativen Zielzeiten, werden nicht betrachtet. Findet sich kein mögliches Manöver, kann der Algorithmus beispielsweise mit erhöhten Beschleunigungen oder Verzögerungen erneut ausgeführt werden, um Sicherheitsmanöver zu bewerten oder ein Notfallmanöver zu initiieren. Das im Sinne des Kostenfunktionals günstigste Manöver kann an die unterlagerte Trajektorienplanung weitergegeben werden, damit die Trajektorienplanung eine oder mehrere Freifahrttrajektorien für das Egofahrzeug planen kann.

Durch das Verfahren 200 können mögliche Trajektorien, entlang der das Ego-Fahrzeug 102 fahren kann, auf Trajektorien eingegrenzt werden, die auf der aktuellen Fahrspur des Ego-Fahrzeugs enden oder die auf der rechten Fahrspur des Ego-Fahrzeugs enden. Eine Berechnung von Trajektorien, die auf der linken Fahrspur enden, kann somit im Beispiel von Fig. 1 vermieden werden. Durch Berücksichtigung der maximal möglichen Verzögerungen kann darüber hinaus der zeitliche Horizont der Trajektorien abgeschätzt werden. Trajektorien, die innerhalb kürzester Zeit große Differenzgeschwindigkeiten auf- oder abbauen müssen, können ebenso wie Spurwechsel in zu kurzen Zeitintervallen ausgeschlossen werden. Damit kann sich im Beispiel von Fig. 1 ein Spurwechsel auf die rechte Nachbarspur als Lösung ergeben.

Vorteilhafterweise kann das Verfahren 200 effizient eine Folgefahrt oder eine Freifahrt des Egofahrzeugs vorausschauend unter Verwendung eines Bewegungsmodells bestimmen. Dadurch kann die Trajektorienplanung genau für einen bestimmten Fahrtmodus Trajektorien berechnen. Eine Betrachtung des jeweils anderen Fahrtmodus muss nicht mehr durchgeführt werden. Die Trajektorienplanung kann somit effizienter, insbesondere ressourceneffizienter, auf Steuergeräten ausgeführt werden.

**Bezugszeichenliste**

| | |
|---|---|
| 100 | Verkehrssituation |
| 102 | Egofahrzeug |
| 104 | Fremdfahrzeug |
| 106 | Fremdfahrzeug |
| 108 | Fremdfahrzeug |
| 110 | Phantomfahrzeug |
| 200 | Verfahren |
| 202 | Bestimmen einer Längsbewegung eines Egofahrzeugs |
| 204 | Bestimmen einer Längsbewegung eines Objekts |
| 206 | Berechnen einer Zieltrajektorie |
| 208 | Berechnen eines Endzeitpunkts eines Manövers |
| 210 | Berechnen eines Abstand zum berechneten Endzeitpunkt |
| 212 | Setzen der Zielgeschwindigkeit |
| 214 | Übergeben/Übermitteln der Zielgeschwindigkeit an eine Trajektorienplanung |
| 300 | beispielhafter Geschwindigkeitsverlauf |
| 302 | Geschwindigkeitsverlauf eines Egofahrzeugs |
| 304 | Geschwindigkeitsverlauf eines Objekts |
| 400 | Trajektorienverlauf |
| 402 | Trajektorie eines Manövers |
| 404 | prädizierte Trajektorie |
| 406 | Zieltrajektorie |

**Patentansprüche**

**1.** Verfahren (200) zum Steuern einer Trajektorienplanung eines Egofahrzeugs (102), das Verfahren (200) umfassend:

Bestimmen (202) einer Längsbewegung des Egofahrzeugs (102), wobei die Längsbewegung eine Geschwindigkeit des Egofahrzeugs (102) umfasst;

Bestimmen (204) einer Längsbewegung eines Objekts, wobei die Längsbewegung eine Geschwindigkeit des Objekts umfasst;

Berechnen (206) einer Zieltrajektorie des Objekts basierend auf einer prädizierten Trajektorie des Objekts;

Berechnen (208) eines Endzeitpunkts eines Manövers des Egofahrzeugs (102),

wobei der Endzeitpunkt des Manövers ein Zeitpunkt ist, an dem eine Differenzgeschwindigkeit zwischen dem Egofahrzeug (102) und dem Objekt abgebaut ist;

Berechnen (210) eines Abstands zwischen einer Position des Egofahrzeugs (102) und einer Position des Objekts bezüglich der berechneten Zieltrajektorie zum berechneten Endzeitpunkt des Manövers des Egofahrzeugs;

Falls der berechnete Abstand des Egofahrzeugs zum berechneten Endzeitpunkt des Manövers gleich einem vorgegebenen Schwellwert ist oder den

vorgegebenen Schwellwert

unterschreitet:

Setzen (212) der bestimmten Geschwindigkeit des Objekts als Zielgeschwindigkeit des Egofahrzeugs; und

Übermitteln (214) der Zielgeschwindigkeit an die Trajektorienplanung zur Berechnung einer Folgefahrttrajektorie für das Egofahrzeug;

Empfangen einer Wunschgeschwindigkeit des Egofahrzeugs; und

Falls die Wunschgeschwindigkeit des Egofahrzeugs kleiner als die Geschwindigkeit des Objekts ist und der berechnete Abstand des Egofahrzeugs zum berechneten Endzeitpunkt des Manövers den vorgegebenen Schwellwert überschreitet,

Setzen der Wunschgeschwindigkeit als Zielgeschwindigkeit des Egofahrzeugs; und

Übermitteln der Zielgeschwindigkeit an die Trajektorienplanung zur Berechnung einer Freifahrttrajektorie für das Egofahrzeug.

2. Verfahren (200) nach Anspruch 1, wobei die prädizierte Trajektorie basierend auf einem vorgegebenen Bewegungsmodell des Objekts in Abhängigkeit der bestimmten Längsbewegung des Objekts bestimmt wird; und wobei vorzugsweise

die Zieltrajektorie einen Sicherheitsabstand zu dem Objekt berücksichtigt; und/oder

der vorgegebene Schwellwert dem Sicherheitsabstand entspricht.

3. Verfahren (200) nach Anspruch 2, wobei der Endzeitpunkt des Manövers basierend auf dem Bewegungsmodell des Objekts und einem Bewegungsmodell für das Egofahrzeug (102) berechnet wird.

4. Verfahren (200) nach Anspruch 3, wobei das Bewegungsmodell des Objekts eine Beschleunigung des Objekts bis zu einem vorgegebenen Zeitpunkt konstant hält und nach dem vorgegebenen Zeitpunkt die Beschleunigung auf 0 setzt; und

wobei das Bewegungsmodell des Egofahrzeugs (102) eine vorgegebene mittlere Beschleunigung des Egofahrzeugs bis zum Endzeitpunkt des Manövers hält.

5. Verfahren (200) nach Anspruch 3 oder 4, wobei die Position des Egofahrzeugs (102) durch das Bewegungsmodell des Egofahrzeugs (102) basierend auf der bestimmten Längsbewegung des Egofahrzeugs (102) zu dem Endzeitpunkt des Manövers berechnet wird; und

wobei die Position des Objekts durch das Bewegungsmodells des Objekts basierend auf der bestimmten Längsbewegung des Objekts zu dem Endzeitpunkt des Manövers berechnet wird.

6. Verfahren (200) nach einem der vorhergehenden Ansprüche, das Verfahren weiterhin umfassend:

Falls die Wunschgeschwindigkeit des Egofahrzeugs (102) größer als die Geschwindigkeit oder gleich der Geschwindigkeit des Objekts ist und/oder der berechnete Abstand des Egofahrzeugs (102) zum berechneten Endzeitpunkt des Manövers gleich einem vorgegebenen Schwellwert ist oder einen vorgegebenen Schwellwert unterschreitet,

Setzen der Geschwindigkeit des Objekts als Zielgeschwindigkeit des Egofahrzeugs.

7. Computerprogrammprodukt zum Steuern einer Trajektorienplanung eines Egofahrzeugs (102), wobei das Computerprogrammprodukt Instruktionen umfasst, die, wenn ausgeführt auf einem Steuergerät oder einem Rechner des Egofahrzeugs (102), das Verfahren (200) nach einem der Ansprüche 1 bis 6 ausführen.

8. Vorrichtung zum Steuern einer Trajektorienplanung eines Egofahrzeugs (102), wobei die Vorrichtung dazu ausgebildet ist, das Verfahren (200) nach einem der Ansprüche 1 bis 6 auszuführen.

9. Fahrzeug umfassend eine Vorrichtung zum Steuern einer Trajektorienplanung eines Egofahrzeugs (102), wobei die Vorrichtung dazu ausgebildet ist, das Verfahren (200) nach einem der Ansprüche 1 bis 6 auszuführen.

**Claims**

1. Method (200) for controlling a trajectory planning process of an ego-vehicle (102), the method (200) comprising:

   determining (202) a longitudinal movement of the ego-vehicle (102), the longitudinal movement comprising a speed of the ego-vehicle (102);
   determining (204) a longitudinal movement of an object, the longitudinal movement comprising a speed of the object;
   calculating (206) a target trajectory of the object on the basis of a predicted trajectory of the object;
   calculating (208) an end time of a manoeuvre of the ego-vehicle (102),
   the end time of the manoeuvre being a time at which a differential speed between the ego-vehicle (102) and the object has decreased;
   calculating (210) a distance between a position of the ego-vehicle (102) and a position of the object with respect to the calculated target trajectory at the calculated end time of the manoeuvre of the ego-vehicle; and
   if the calculated distance of the ego-vehicle at the calculated end time of the manoeuvre is equal to a predefined threshold value or undershoots the predefined threshold value:

      setting (212) the determined speed of the object as the target speed of the ego-vehicle; and
      transmitting (214) the target speed to the trajectory planning process for calculating a follow-on travel trajectory for the ego-vehicle;
      receiving a desired speed of the ego-vehicle; and
      if the desired speed of the ego-vehicle is less than the speed of the object and the calculated distance of the ego-vehicle at the calculated end time of the manoeuvre exceeds the predefined threshold value,
      setting the desired speed as the target speed of the ego-vehicle; and
      transmitting the target speed to the trajectory planning process for calculating a free travel trajectory for the ego-vehicle.

2. Method (200) according to Claim 1, wherein the predicted trajectory is determined on the basis of a predefined movement model of the object on the basis of the determined longitudinal movement of the object; and

   wherein the target trajectory preferably takes into account a safety distance to the object; and/or
   the predefined threshold value corresponds to the safety distance.

3. Method (200) according to Claim 2, wherein the end time of the manoeuvre is calculated on the basis of the movement model of the object and a movement model for the ego-vehicle (102).

4. Method (200) according to Claim 3, wherein the movement model of the object keeps an acceleration of the object constant until a predefined time and sets the acceleration to 0 after the predefined time; and
   wherein the movement model of the ego-vehicle (102) keeps a predefined average acceleration of the ego-vehicle until the end time of the manoeuvre.

5. Method (200) according to Claim 3 or 4, wherein the position of the ego-vehicle (102) is calculated by means of the movement model of the ego-vehicle (102) on the basis of the determined longitudinal movement of the ego-vehicle (102) at the end time of the manoeuvre; and
   wherein the position of the object is calculated by means of the movement model of the object on the basis of the determined longitudinal movement of the object at the end time of the manoeuvre.

**6.** Method (200) according to one of the preceding claims, the method also comprising:

if the desired speed of the ego-vehicle (102) is greater than or equal to the speed of the object and/or the calculated distance of the ego-vehicle (102) at the calculated end time of the manoeuvre is equal to a predefined threshold value or undershoots a predefined threshold value,
setting the speed of the object as the target speed of the ego-vehicle.

**7.** Computer program product for controlling a trajectory planning process of an ego-vehicle (102), wherein the computer program product comprises instructions which, when executed on a control device or a computer of the ego-vehicle (102), carry out the method (200) according to one of Claims 1 to 6.

**8.** Device for controlling a trajectory planning process of an ego-vehicle (102), wherein the device is designed to carry out the method (200) according to one of Claims 1 to 6.

**9.** Vehicle comprising a device for controlling a trajectory planning process of an ego-vehicle (102), wherein the device is designed to carry out the method (200) according to one of Claims 1 to 6.

**Revendications**

**1.** Procédé (200) permettant de commander une planification de trajectoire d'un véhicule ego (102), le procédé (200) comprenant les étapes consistant à :

déterminer (202) un déplacement longitudinal du véhicule ego (102), le déplacement longitudinal comprenant une vitesse du véhicule ego (102) ;
déterminer (204) un déplacement longitudinal d'un objet, le déplacement longitudinal comprenant une vitesse de l'objet ;
calculer (206) une trajectoire cible de l'objet sur la base d'une trajectoire prédite de l'objet ;
calculer (208) un instant final d'une manœuvre du véhicule ego (102), l'instant final de la manœuvre étant un instant auquel une vitesse différentielle entre le véhicule ego (102) et l'objet est réduite ;
calculer (210) une distance entre une position du véhicule ego (102) et une position de l'objet par rapport à la trajectoire cible calculée à l'instant final calculé de la manœuvre du véhicule ego ;
si la distance calculée du véhicule ego à l'instant final calculé de la manœuvre est égale à une valeur seuil prédéfinie ou est inférieure à la valeur seuil prédéfinie :

régler (212) la vitesse déterminée de l'objet comme vitesse cible du véhicule ego ; et
transmettre (214) la vitesse cible à la planification de trajectoire pour calculer une trajectoire de conduite suivante pour le véhicule ego ;

recevoir une vitesse souhaitée du véhicule ego ; et
si la vitesse souhaitée du véhicule ego est inférieure à la vitesse de l'objet et la distance calculée du véhicule ego dépasse la valeur seuil prédéfinie à l'instant final calculé de la manœuvre,

régler la vitesse souhaitée comme vitesse cible du véhicule ego ; et
transmettre la vitesse cible à la planification de trajectoire pour calculer une trajectoire de conduite libre pour le véhicule ego.

**2.** Procédé (200) selon la revendication 1, dans lequel la trajectoire prédite est déterminée sur la base d'un modèle de déplacement prédéfini de l'objet en fonction du déplacement longitudinal déterminé de l'objet ; et

dans lequel de préférence la trajectoire cible tient compte d'une distance de sécurité par rapport à l'objet ; et/ou la valeur seuil prédéfinie correspond à la distance de sécurité.

**3.** Procédé (200) selon la revendication 2, dans lequel l'instant final de la manœuvre est calculé sur la base du modèle de déplacement de l'objet et d'un modèle de déplacement pour le véhicule ego (102).

**4.** Procédé (200) selon la revendication 3, dans lequel le modèle de déplacement de l'objet maintient constante une accélération de l'objet jusqu'à un instant prédéfini et règle l'accélération sur 0 après l'instant prédéfini ; et

le modèle de déplacement du véhicule ego (102) maintenant une accélération moyenne prédéfinie du véhicule ego jusqu'à l'instant final de la manœuvre.

5. Procédé (200) selon la revendication 3 ou 4, dans lequel la position du véhicule ego (102) est calculée par le modèle de déplacement du véhicule ego (102) sur la base du déplacement longitudinal déterminé du véhicule ego (102) à l'instant final de la manœuvre ; et

la position de l'objet étant calculée par le modèle de déplacement de l'objet sur la base du déplacement longitudinal déterminé de l'objet à l'instant final de la manœuvre.

6. Procédé (200) selon l'une quelconque des revendications précédentes, le procédé comprenant en outre :

si la vitesse souhaitée du véhicule ego (102) est supérieure à la vitesse ou égale à la vitesse de l'objet et/ou la distance calculée du véhicule ego (102) à l'instant calculé de la manœuvre est égale à une valeur seuil prédéfinie ou est inférieure à une valeur seuil prédéfinie,

le réglage de la vitesse de l'objet comme vitesse cible du véhicule ego.

7. Produit de programme informatique permettant de commander une planification de trajectoire d'un véhicule ego (102), le produit de programme informatique comprenant des instructions qui, quand elles sont exécutées sur un appareil de commande ou un ordinateur du véhicule ego (102), exécutent le procédé (200) selon l'une quelconque des revendications 1 à 6.

8. Dispositif de commande d'une planification de trajectoire d'un véhicule ego (102), le dispositif étant réalisé pour exécuter le procédé (200) selon l'une quelconque des revendications 1 à 6.

9. Véhicule, comprenant un dispositif de commande d'une planification de trajectoire d'un véhicule ego (102), le dispositif étant réalisé pour exécuter le procédé (200) selon l'une quelconque des revendications 1 à 6.

Fig. 1

Fig. 2

Fig. 3

Fig. 4

EP 3 374 240 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10017622 A1